Europäisches Patentamt

European Patent Office

Office européen des brevets

(11) Numéro de publication: **0 068 538**
A2

(12) **DEMANDE DE BREVET EUROPEEN**

(21) Numéro de dépôt: **82200678.9**

(22) Date de dépôt: **03.06.82**

(51) Int. Cl.³: **B 62 J 25/00**

(30) Priorité: **11.06.81 IT 8557881**

(43) Date de publication de la demande: **05.01.83**
Bulletin 83/1

(84) Etats contractants désignés: **AT BE CH DE FR GF !T LI LU NL SE**

(71) Demandeur: **MOTO LAVERDA SPA, Via Venezia, 16, I-36042 Breganze (Vicenza) (IT)**

(72) Inventeur: **Malenotti, Franco, Via Cassia, 531, Roma (IT)**

(74) Mandataire: **Bettello, Luigi, Dott. Ing., Via Col d'Echele, 25, I-36100 Vicenza (IT)**

(54) Dispositif pour le réglage de la position des repose-pied sur les motocyclettes.

㊗ Chaque repose-pied (1) est fixé de manière excentrée sur deux disques (2 et 2') qui embrassent une portée annulaire (4) de la plaque-support (3) du cadre de la motocyclette. Le desserrage et le serrage subséquent de l'écrou (6) et de la vis (7) permettent, par rotation des disques, le réglage précis de la position du repose-pied.

Dispositif pour le réglage de la position des repose-pied
sur les motocyclettes

La présente invention a pour objet un dispositif pour le
réglage de la position de chacun des repose-pied montés sur
les motocyclettes, afin de permettre, à l'intérieur de
certaines limites, un positionnement de ceux-ci mieux adapté
à l'utilisateur.

On sait que l'une des difficultés rencontrées par le motocycliste, notamment pour les engins de sport, est celle de
devoir s'adapter, par la position des pieds, à la position
généralement fixe de chacun des repose-pied prévus sur la
motocyclette. Par suite de cette fixité, c'est le motocycliste
qui est contraint de modifier sa position sur la machine en
fonction du positionnement des repose-pied en liaison avec
ses caractéristiques physiologiques.

On notera également que la fixité de la position des repose-
pied sur le cadre de la motocyclette se révèle génante
lorsque l'utilisateur est confronté à des courbes à petit
rayon qui l'obligent à s'incliner fortement sur un côté,
l'extrémité du repose-pied correspondant risquant à cette
occasion de venir porter contre le sol en provoquant évidemment des embardées sinon des chutes.

La présente invention vise à donner au motocycliste la
possibilité de régler la position des repose-pied sur le
cadre de l'engin, afin d'adapter ceux-ci à ses caractéristiques
physiologiques et également de modidifier leur positionnement
en fonction du type de parcours à effectuer, ce réglage
étant réalisé de manière aisée, sans nécessiter d'autres
outils qu'un tournevis et une clef.

L'invention consiste essentiellement, d'après la partie
caractérisante de la revendication 1, à monter chaque repose-
pied sur un organe à profil circulaire mobile par rapport au
cadre, en vue de permettre le réglage de la position du
repose-pied considéré, en fonction d'exigences particulières, dans les limites d'une circonférence donnée.

Une fois la position optimale obtenue, le repose-pied est immobilisé moyennant manoeuvre d'une vis et d'un écrou.

Il va de soi que la pédale pour la commande de la boîte à vitesse sur un côté du cadre, et celle pour l'actionnement du frein sur le côté opposé, doivent suivre les déplacements du repose-pied correspondant, mais ceci ne soulève pas de difficulté par suite du caractère réglable des moyens de transmission associés à ces deux pédales.

Le dessin annexé, donné à titre d'exemple, permettra de mieux comprendre l'invention, les caractéristiques qu'elle présente et les avantages qu'elle est susceptible de procurer :

    Fig. 1 est une vue de côté montrant une motocyclette équipée d'un dispositif de réglage suivant l'invention.

    Fig. 2 montre de la même manière, mais à plus grande échelle, le dispositif de réglage proprement dit.

    Fig. 3 est la vue en plan correspondante avec arrachement horizontal partiel.

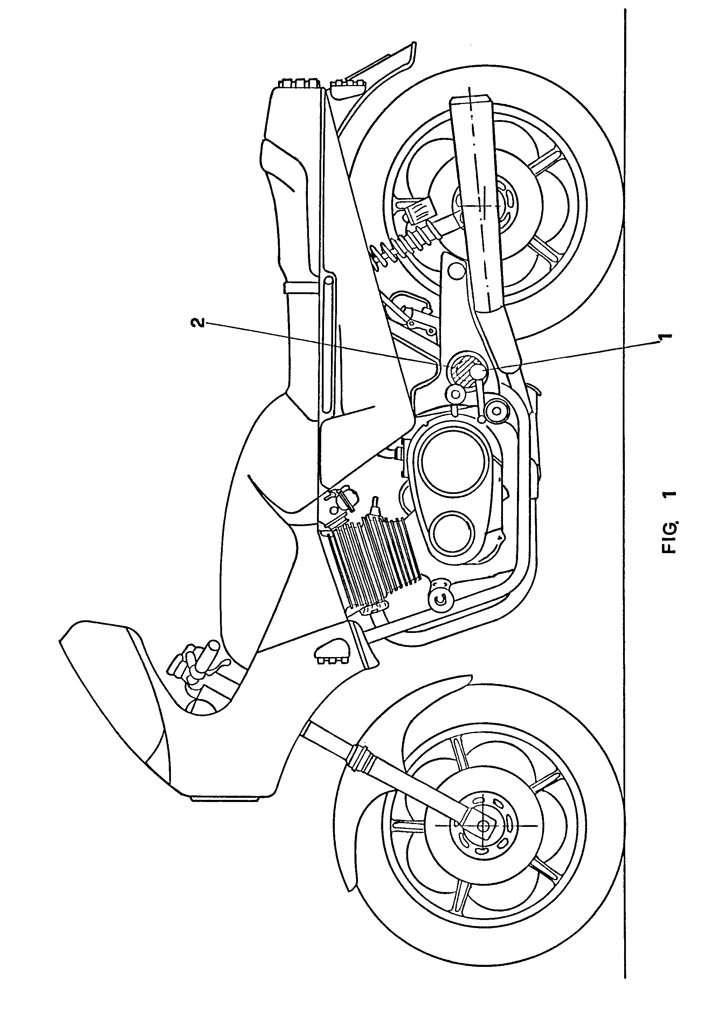

Comme clairement montré en fig. 1, le repose-pied 1 est monté sur un disque 2 à une position excentrée par rapport au centre de celui-ci. Comme ce dernier peut se déplacer angulairement suivant son centre à l'intérieur de la plaque-support du cadre, le repose-pied 1 peut affecter une position quelconque dans l'étendue d'une circonférence ayant pour centre celui du disque 2 et pour rayon l'excentricité dudit repose-pied par rapport audit centre.

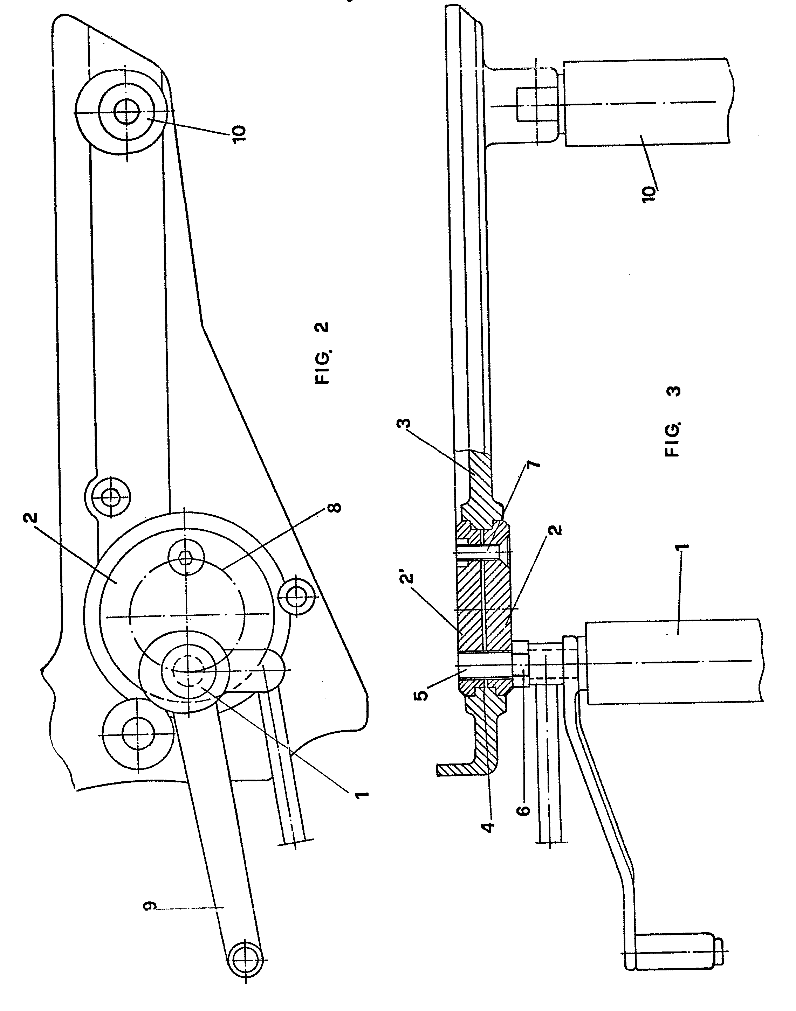

En fig. 2 et 3 on peut voir plus en détail le repose-pied 1 monté sur le disque 2, lequel est associé à un contre-disque 2' disposé sur le côté opposé de la plaque-support référencée 3 par rapport à laquelle ces disques sont susceptibles de se déplacer angulairement.

Le bord de chacun des deux disques 2 et 2' est conformé pour présenter un profil en forme de L, ce profil étant inversé sur l'un et l'autre disque de façon à ce que ceux-ci embrassent une nervure annulaire ou portée 4 ménagée dans une ouverture à profil circulaire découpée dans la plaque-support 3. Cette nervure 4 se trouve fermement maintenue entre les disques 2 et 2' après serrage d'une tige filetée 5 manoeuvrée à l'aide d'un écrou hexagonal 6, et d'une vis 7, par exemple à tête fraisée, prévue en position diamétralement opposée.

On comprend que le desserrage et le serrage des organes 5 et 7 permettent le réglage et l'immobilisation subséquente du repose-pied 1 sur la circonférence indiquée en 8 en fig. 2, circonférence qui a pour centre celui des disques 2 et 2' et pour rayon l'excentricité dudit repose-pied sur les disques précités.

Bien entendu le déplacement du repose-pied 1 provoque celui de la pédale 9 destinée à la commande de la boîte à vitesse d'un côté, du frein arrière de l'autre. Mais le déplacement de cette pédale est rendue possible par les transmissions, elles-mêmes prévues réglables.

On conçoit sans peine les avantages présentés par le dispositif suivant l'invention. Moyennant une manoeuvre aisée, ce dispositif permet de modifier la position de chaque repose-pied, par exemple afin d'en régler la distance par rapport au repose-pied 10 du passager ou la hauteur par rapport au plan de la chaussée. Cette dernière possibilité de réglage se révèle particulièrement avantageuse lorsque l'utilisateur prévoit des parcours comportant des courbes à très court rayon impliquant à grande vitesse une forte inclinaison de la motocyclette ; en pareil cas chaque repose-pied 1 sera préférablement amené au point le plus haut de la circonférence 8.

Lorsque l'engin doit être conduit de manière sportive, il sera oppurtun d'amener le repose-pied 1 à la position arrière la plus proche du repose-pied 10 destiné au passager.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tous autres équivalents.

0068538

Revendications de brevet

1. Dispositif pour le réglage de la position des repose-pied sur les motocyclettes, caractérisé en ce qu'il comprend deux disques opposés (2, 2') montés de manière à pouvoir tourner dans une portée prévue dans une plaque-support (3) rapportée contre le cadre de l'engin, le repose-pied étant vissé sur ces disques à une position excentrée par rapport à leur axe de rotation de façon à permettre le réglage de sa position à l'intérieur d'une circonférence (8) ayant pour centre celui des disques précités et pour rayon l'excentricité du repose-pied.

2. Dispositif suivant la revendication 1, caractérisé en ce qu'il comprend une vis (7) prévue sur les disques (2, 2') à une position diamétralement opposée à celle du repose-pied afin de participer au blocage des deux disques en vue de l'immobilisation de ceux-ci après réglage.

FIG. 1

0068538

FIG. 2

FIG. 3